# EUROPEAN PATENT APPLICATION

(11) **EP 1 152 135 A2**
(43) Date of publication of application: **07.11.2001**
(21) Application number: 01110861.0
(22) Date of filing: 04.05.2001
(51) Int. Cl.: F01N 7/18, F16L 27/111, F16L 51/02

(54) **Flexible vibration-damping decoupling joint, in particular for vehicle exhaust pipes**

(30) Priority: 05.05.2000 IT MI000984
(71) Applicant: FLEXIDER S.p.A., I-10156 Torino (IT)
(72) Inventor: Capra, Gianluigi, 10100 Torino (IT)
(74) Representative: Jorio, Paolo, Dr. Ing.

(57) **Abstract**

A flexible vibration-damping decoupling joint (1), in particular for vehicle exhaust pipes, wherein two opposite annular endpieces (2), fixable to respective pipe portions for connection, are connected to each other by an elastically deformable metal bellows-type sleeve (3); the bellows-type sleeve (3) is fitted coaxially inside with a flow-guide element (7) preferably defined by a continuous, circular-section, flexible helical sleeve (8) having a substantially constant outside diameter and made of coiled seamed metal strip; and the flow-guide element (7) is inserted inside the bellows-type sleeve (3) with a predetermined radial interference, and is fitted with a calibrated radial preload to the undulations (4) of the bellows-type sleeve (3) so that an outer lateral surface (9) of the flow-guide element (7) is in forced radial contact with the undulations (4) of the bellows-type sleeve (3).

## Description

The present invention relates to a flexible vibration-damping decoupling joint for fluidtight connecting two pipe portions, e.g. two portions of a vehicle exhaust pipe.

As is known, the exhaust manifold of a vehicle engine must be connected to the next pipe, fixed to the bodywork, by means of a decoupling joint for preventing vibration from being transmitted from the engine to the rest of the exhaust pipe. In particular, decoupling joints are known which are defined by a flexible metal bellows welded at the ends to two collars in turn welded to the two pipe portions for connection, and which is covered with an outer protective sheath (normally made of steel wire). To damp in-service vibration produced in the bellows by passage of the exhaust gas (which, besides producing a high noise level, may also result in resonance conditions and possible failure), the bellows is fitted inside with a tubular flow-guide element extending between and possibly connecting the two ends of the bellows. This poses the further drawback, however, of the flow-guide element possibly interfering, in use, with and damaging the lateral walls of the bellows, on account of the relative movements of the two ends, so that the joint must be allowed a good deal of clearance, thus greatly increasing overall size.

By way of a solution to the above drawback, European Patent Application EP-A-O 0875 669 employs a further tubular element made of fine wire mesh, and which is interposed radially and forced between the flow-guide element and the bellows to fill the annular gap in between and so damp shock between the flow-guide element and the bellows, shock between the folds of the bellows, and the resonance frequencies of the bellows. By requiring a further component, however, in particular a relatively high-cost wire-mesh element, the above solution is not only expensive and difficult to implement, but also reduces the useful flow section of the bellows.

It is an object of the present invention to provide a decoupling joint designed to eliminate the aforementioned drawbacks, and which, in particular, provides for effectively damping gas-flow-induced vibration, prevents damage to the bellows, and is compact and cheap and easy to produce.

According to the present invention, there is provided a flexible vibration-damping decoupling joint, particularly for vehicle exhaust pipes, comprising two opposite endpieces fixable to respective pipe portions for connection; an elastically deformable, metal bellows-type sleeve connected mechanically at opposite longitudinal ends to said endpieces to connect, in use, said pipe portions in fluidtight manner; and a flexible, tubular flow-guide element housed coaxially inside the bellows-type sleeve and connected mechanically to at least a first of said endpieces; the joint being characterized in that said flow-guide element is inserted inside said bellow-type sleeve with a predetermined radial interference; said flow-guide element being fitted to the undulations of said bellows-type sleeve with a calibrated radial preload.

Though extremely cheap and easy to produce, by comprising only a small number of component parts, the joint according to the invention therefore provides for effectively damping gas-flow-induced vibration and, hence, the resonance frequencies of the bellows, while at the same time preventing shock between the undulations of the bellows and between the bellows and the flow-guide element. Moreover, unlike the wire-mesh element solution, there is no reduction in the flow section of the bellows-type sleeve, as imposed by the wire-mesh element.

A non-limiting embodiment of the present invention will be described by way of example with reference to the accompanying drawings, in which:
Figure 1 shows a half-sectioned, partial longitudinal view of a decoupling joint in accordance with the invention (only one end is shown, the other end being symmetrical);
Figure 2 shows a schematic cross section, not to scale, of the decoupling joint in Figure 1.

With reference to the accompanying drawings, number 1 indicates as a whole a flexible, vibration-damping decoupling joint for fluidtight connecting and mechanically decoupling opposite pipe portions (known and not shown) forming part, for example, of a vehicle exhaust system.

Joint 1 comprises two opposite annular endpieces 2 which are fixed (e.g. welded) to the respective pipe portions for connection; and a substantially known elastically deformable, metal bellows-type sleeve 3 for connecting said pipe portions in fluidtight manner. Bellows-type sleeve 3 comprises a number of circumferential undulations 4, all having the same groove diameter corresponding to an inside diameter of bellows-type sleeve 3, and is connected integrally to endpieces 2 at respective opposite, substantially cylindrical longitudinal ends 5 with no undulations. The inside diameter of bellows-type sleeve 3 is substantially constant, and longitudinal ends 5 have substantially the same inside diameter as undulations 4.

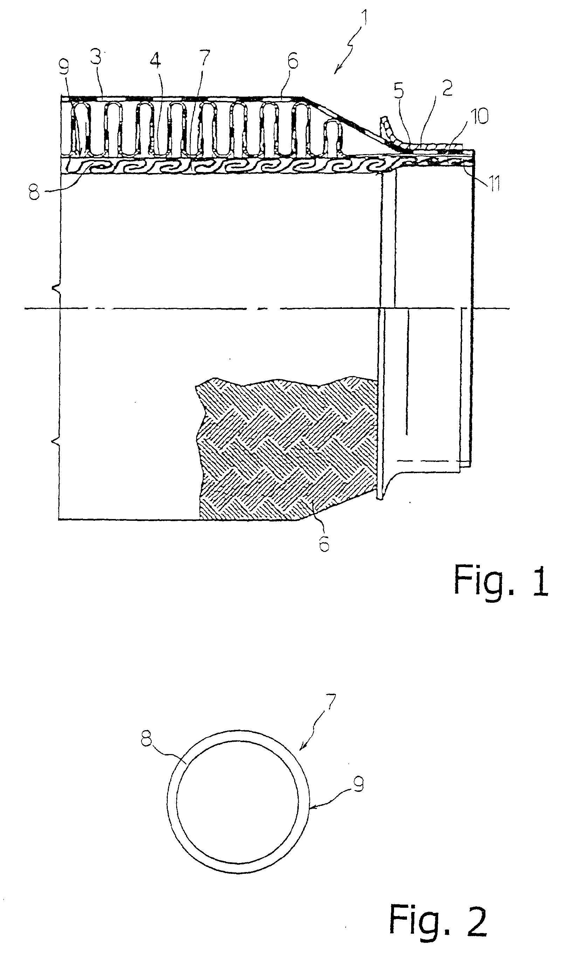

In the non-limiting example shown in Figure 1, longitudinal ends 5 are driven and crimped (preferably widened radially outwards) inside endpieces 2 and, in use, are welded to endpieces 2, e.g. by the same beads fixing endpieces 2 to the respective pipe portions.

Joint 1 also comprises a known partially flexible protective sleeve 6, which defines a mechanically supporting part of joint 1, is located radially on the outside of bellows-type sleeve 3, and is made, for example, of woven metal braid. Protective sleeve 6 is connected mechanically to endpieces 2, together with longitudinal ends 5 of bellow-type sleeve 3, and is crimped between longitudinal ends 5 and the cylindrical inner lateral surfaces of endpieces 2.

Joint 1 also comprises a flexible tubular flow-guide element 7 housed coaxially inside bellows-type sleeve 3. More specifically, flow-guide element 7 is defined by a continuous, flexible, helical sleeve 8 made of coiled seamed metal strip and permanently deformable circumferentially. Flow-guide element 7 is connected mechanically in known manner to at least one of (and preferably both) endpieces 2, and projects axially inside bellows-type sleeve 3 to define a tubular conduit portion.

According to the invention, flow-guide element 7 is inserted with a predetermined radial interference inside bellows-type sleeve 3, is fitted with a calibrated radial preload to undulations 4 of bellows-type sleeve 3, and is a tubular, circular-section element (Figure 2) with a substantially constant outside diameter substantially equal to the inside diameter of undulations 4 of bellows-type sleeve 3, so that an outer lateral surface 9 of flow-guide element 7 is in forced radial contact with undulations 4 of bellows-type sleeve 3.

Being defined by flexible helical sleeve 8 made of coiled seamed metal strip and permanently deformable circumferentially to assume different outside diameters, flow-guide element 7 can be inserted easily inside bellow-type sleeve 3 and force-fitted easily to undulations 4 with the desired radial preload. That is, at assembly, flow-guide element 7 need simply be twisted circumferentially in a given first direction, corresponding to the winding direction of flexible helical sleeve 8, to so reduce the outside diameter of flow-guide element 7 as to insert it easily inside bellow-type sleeve 3; and, once inserted inside bellow-type sleeve 3, flow-guide element 7 is twisted circumferentially in the opposite direction to permanently deform and increase the outside diameter of flow-guide element 7 to achieve the desired radial preload. The force fit between flow-guide element 7 and undulations 4 of bellows-type sleeve 3 is obviously so calibrated as to prevent overly stressing bellows-type sleeve 3.

Flow-guide element 7 is preferably connected integrally to endpiece 2 by a cylindrical end portion 10 (or to both endpieces 2 by respective cylindrical end portions 10) having an outside diameter substantially equal to, and an inside diameter smaller than, the diameter of flow-guide element 7; and end portion 10 of flow-guide element 7 is fitted to the bellows-type sleeve by permanently deforming and radially widening outwards end portion 10, a lateral wall 11 of which is therefore pinched radially and reduced in radial thickness.

Flow-guide element 7 may, of course, be connected mechanically to endpiece 2 (or both endpieces 2) in different ways : in particular, by spot or bead welding, as opposed to simply crimping end portion 10 permanently onto the inside of bellows-type sleeve 3 and, hence, onto endpiece 2.

Clearly, changes may be made to the joint as described and illustrated herein without, however, departing from the scope of the present invention.

## Claims

1. A flexible vibration-damping decoupling joint (1), particularly for vehicle exhaust pipes, comprising two opposite endpieces (2) fixable to respective pipe portions for connection; an elastically deformable, metal bellows-type sleeve (3) connected mechanically at opposite longitudinal ends (5) to said endpieces (2) to connect, in use, said pipe portions in fluidtight manner; and a flexible, tubular flow-guide element (7) housed coaxially inside the bellows-type sleeve and connected mechanically to at least a first of said endpieces; the joint being **characterized in that** said flow-guide element (7) is inserted inside said bellow-type sleeve (3) with a predetermined radial interference; said flow-guide element (7) being fitted to the undulations (4) of said bellows-type sleeve (3) with a calibrated radial preload.

2. A joint as claimed in Claim 1, **characterized in that** said flow-guide element (7) is a circular-section tubular element with a substantially constant outside diameter substantially equal to the inside diameter of the undulations (4) of said bellows-type sleeve (3); an outer lateral surface (9) of said flow-guide element (7) being in forced radial contact with the undulations (4) of said bellows-type sleeve (3).

3. A joint as claimed in Claim 1 or 2, **characterized in that** said flow-guide element (7) is defined by a continuous flexible helical sleeve (8) made of coiled seamed metal strip.

4. A joint as claimed in Claim 3, **characterized in that** said calibrated radial preload is obtained by twisting said flexible helical sleeve (8) circumferentially in a given direction, so as to permanently deform and increase the diameter of said flexible helical sleeve (8).

5. A joint as claimed in one of the foregoing Claims, **characterized in that** said flow-guide element (7) is connected integrally to said at least a first endpiece (2) by a cylindrical end portion (10); said end portion (10) having an outside diameter substantially equal to, and an inside diameter smaller than, the diameter of said flow-guide element (7); a lateral wall (11) of said end portion (10) being pinched radially and reduced in radial thickness.
